# EUROPÄISCHE PATENTANMELDUNG

(11) **EP 2 756 889 A1**
(43) Veröffentlichungstag der Anmeldung: **23.07.2014**
(21) Anmeldenummer: 14000099.3
(22) Anmeldetag: 13.01.2014
(51) Int. Cl.: B05B 12/12, B05B 13/04, B05B 15/04, B65G 45/22, B65G 45/24

(54) **Optimierung einer Vorrichtung zum Lackieren von Werkstücken**

(30) Priorität: 18.01.2013 DE 102013000884
(71) Anmelder: Venjakob Maschinenbau GmbH & Co. KG, 33378 Rheda-Wiedenbrück (DE)
(72) Erfinder: Streit, Christian, 33378 Rheda-Wiedenbrück (DE); Voigt, Joachim, 33378 Rheda-Wiedenbrück (DE)
(74) Vertreter: DTS München

(57) **Zusammenfassung**

Die Erfindung betrifft eine Vorrichtung (1) zum Lackieren von Werkstücken umfassend
- einen umlaufend antreibbaren Bandförderer (2) zum Transport zu lackierender Werkstücke (13),
- mindestens einen Farbspritzroboter (6) und
- mindestens einen Flächenspritzautomaten (8),

wobei der Farbspritzroboter (6) eingerichtet ist, Seitenflächen (14) und/oder Deckflächen (15) des Werkstückes (13) zu lackieren und der Flächenspritzautomat (8) eingerichtet ist, die Deckflächen (15) und/oder Seitenflächen (14) des Werkstückes (13) zu lackieren.

## Beschreibung

Die Erfindung befasst sich mit einer Vorrichtung zum Lackieren von Werkstücken.

Im Stand der Technik gibt es eine Vielzahl unterschiedlicher Möglichkeiten um Werkstücke zu lackieren. Beispiele für existierende Lackiersysteme sind Roboterlackieranlagen mit Flur- und Hängefördersystemen, Spindelkettenförderer oder Flächenspritzlackieranlagen.

Nachteilig am Stand der Technik ist, dass ein nahezu verlustfreier Farbauftrag auf die Werkstücke nicht erreichbar ist und der Wirkungsgrad bei der Lackrückgewinnung optimierbar ist.

Es ist daher Aufgabe der vorliegenden Erfindung, eine Farbspritzanlage vorzusehen, bei der die Nachteile aus dem Stand der Technik überwunden werden.

Folglich ist eine Aufgabe der vorliegenden Erfindung, eine Farbspritzanlage vorzusehen, die einen nahezu verlustfreien Farbauftrag auf die Werkstücke vorsieht und eine sinnvolle Lackrückgewinnung möglich macht.

Diese Aufgabe wird gelöst durch eine Farbspritzanlage gemäß Anspruch 1.

Weiterhin wird diese Aufgabe gelöst durch ein Verfahren gemäß Anspruch 10.

Weitere vorteilhafte Ausgestaltungen der vorliegenden Erfindung sind in den abhängigen Ansprüchen angegeben.

Gemäß einem Aspekt der Erfindung ist eine Vorrichtung zum Lackieren von Werkstücken vorgesehen, umfassend einen umlaufend antreibbaren Bandförderer zum Transport zu lackierender Werkstücke, mindestens einen Farbspritzroboter und mindestens einen Flächenspritzautomaten, wobei der Farbspritzroboter eingerichtet ist, Seitenflächen und/oder Deckflächen des Werkstückes zu lackieren und der Flächenspritzautomat eingerichtet ist, die Deckflächen und/oder Seitenflächen des Werkstückes zu lackieren. Somit kann je nach Form des zu lackierenden Werkstückes entschieden werden, wie lackiert werden soll, um einen nahezu verlustfreien Farbauftrag zu bewerkstelligen.

In einer besonders bevorzugten Ausführungsform der Erfindung ist der Farbspritzroboter eingerichtet nur die Seitenflächen des Werkstückes zu lackieren und der Flächenspritzautomat ist eingerichtet nur die Deckflächen des Werkstückes zu lackieren. Damit können dem Farbspritzroboter und dem Flächenspritzautomaten definierte Oberflächen zugewiesen werden, um so einen verbesserten und nahezu verlustfreien Farbauftrag am Werkstück zu gewährleisten.

Die Vorrichtung zum Lackieren von Werkstücken ist bevorzugt eine Farbspritzanlage bzw. eine Spritzlackier-Anlage für die Verarbeitung von nahezu allen Lacksystemen wie z.B. 1 K, 2K-Lacke, wasserbasierten-, lösungsmittelbasierten- oder UV-härtenden Lacken.

Ein Bandförderer oder Papierförderer (auch Gurtbandförderer oder Gurtförderer) ist eine stationäre Förderanlage, die zur Familie der Stetigförderer gehört. Sie weisen eine sehr hohe Betriebssicherheit und sind zuverlässige Transportsysteme, die ökonomisch, sehr produktiv und umweltfreundlich auf Grund ihres geringen Energiebedarfs arbeiten.

Bevorzugt weist der Bandförderer ein Endlos-Förderband und wenigstens zwei Umlenktrommeln auf. Damit kann der Transport der Werkstücke auf dem Förderband auf einfache Weise erfolgen.

Der Farbspritzroboter (Kantenspritzroboter) weist bevorzugt einen mehrgliederigen Arm auf, der an einem seiner Enden ein Aufnahmemittel für eine oder mehrere Farbspritzpistolen aufweist.

Flächenspritzautomaten werden für den flächigen Farbauftrag auf Werkstücke, insbesondere für deren Deckflächen verwendet.

Seitenflächen eines Werkstückes sind bei geometrischen Körpern, wie bspw. einem quaderförmigen Körper oder einem Würfel alle Flächen die nicht Grund- oder Deckfläche sind. Bei zylindrischen Körpern ist dies die Mantelfläche.

Deckflächen eines Werkstückes sind bei geometrischen Körpern, wie bspw. einem quaderförmigen Körper, einem Würfel oder einem zylindrischen Körper, die der Grundfläche gegenüberliegende parallele oder annähernd parallele Fläche.

Eine vorteilhafte Weiterbildung sieht vor, dass der Farbspritzroboter eingerichtet ist, im Werkstück innen liegende Konturflächen zu lackieren. Damit ist es möglich neben den Seitenflächen eines Werkstückes auch die innen liegenden Konturflächen zu lackieren, die beispielsweise durch Aussparungen oder Ausnehmungen am Werkstück entstehen.

Die Aussparungen können sich innerhalb des Werkstückes befinden und die Ausnehmungen können am Rand- bzw. Kantenbereich der Werkstücke vorgesehen sein.

Besonders bevorzugt weist der Farbspritzroboter mindestens eine Spritzpistole auf, um einen ausreichenden Farbauftrag zu bewerkstelligen.

Unter einer Spritzpistole versteht man bevorzugt eine Einrichtung zum Aufbringen von Farbe auf das Werkstück.

Bevorzugt werden mehrere Spritzpistolen verwendet. Durch die Verwendung mehrerer Farbspritzpistolen muss bei einem Farbwechsel keine Reinigung der Pistolen/deren Düsen erfolgen, was zu einer Zeitersparnis führt.

Mit dem mehrgliederigen Arm des Spritzroboters kann die Farbspritzpistole bevorzugt in jede Stellung/Position gegenüber dem Werkstück gebracht werden.

Eine weitere vorteilhafte Weiterbildung sieht vor, dass die Spritzpistole eine Düse aufweist, die bevorzugt einen Sprühwinkel/Farbaustragwinkel von 15° bis 65° und besonders bevorzugt von 40° aufweist. Damit lässt sich ein definierter Farbauftrag auf die Seitenflächen bzw. die innen liegenden Konturflächen des jeweiligen Werkstückes erzielen.

Besonders bevorzugt ist die Spritzpistole um mehrere Achsen beweglich angeordnet.

Das Aufnahmemittel für die Spitzpistole ist bevorzugt so gestaltet, dass die Pistole um sämtliche Achsen bewegbar im Aufnahmemittel angeordnet ist. Die Spritzpistole ist dabei um eine Spritzachse drehbar und/oder horizontal und/oder vertikal verschiebbar angeordnet.

Besonders bevorzugt ist der Farbspritzroboter entlang mindestens einer zusätzlichen Hilfsachse verfahrbar. Das Vorsehen der Hilfsachse ist vorteilhaft, da sich der Farbspritzroboter entsprechend der Dimensionierung des Werkstückes und der Laufgeschwindigkeit des Förderbandes entsprechend anpassen kann.

In einer weiteren vorteilhaften Weiterbildung weist der Flächenspritzautomat mindestens eine Flächenspritzvorrichtung auf.

Die Flächenspritzvorrichtung weist bevorzugt einen breiteren Sprühwinkel zum Farbauftrag auf. Der Sprühwinkel/Farbaustragwinkel beträgt bevorzugt 75° bis 135° und besonders bevorzugt 90°.

Besonders bevorzugt ist die Flächenspritzvorrichtung im Wesentlichen parallel zur Oberseite des Förderbandes ausgerichtet. Bevorzugt umfasst die Flächenspritzvorrichtung eine Vielzahl von bewegbaren Flächenspritzdüsen. Dadurch ist ein flächiger Farbauftrag bspw. von oben auf die Deckfläche des Werkstückes möglich.

Alternativ ist bevorzugt mindestens eine Spritzpistole als Flächenspritzvorrichtung vorsehbar.

Eine vorteilhafte Weiterbildung sieht vor, dass dem Bandförderer eine Lackaustrageinrichtung nachgeschaltet ist.

Die Lackaustrageinrichtung ist bevorzugt unterhalb des Förderbandes angeordnet. Bevorzugt weist die Lackaustrageinrichtung ein Abstreifmittel auf, um die auf dem Förderband verbleibende Farbe abzunehmen/abzuschaben. Abstreifmittel sind bevorzugt Rakeln, Metallschienen oder ein rotierendes Abstreifband. Besonders bevorzugt weist das Abstreifband auch Mittel zur Aufnahme für Reinigungs- oder Rückgewinnungszwecke.

Besonders bevorzugt ist die Lackaustrageinrichtung gegenüber dem Bandförderer (und damit dem Förderband) in der horizontalen Bandebene um 85 bis 95° gedreht angeordnet. Hierdurch lässt sich die überschüssige Farbe am Besten mittels des Abstreifmittels vom Förderband abziehen.

Besonders bevorzugt wird die überschüssige Farbe in einem Lackauffangbehältnis gesammelt und kann dem Farbkreislauf wieder zugeführt werden.

Gemäß einer weiteren vorteilhaften Weiterbildung ist vorgesehen, dass eine 3D oder 2D-Teilerfassungsvorrichtung der Farbspritzanlage vorgeschaltet ist.

Mittels der 3D oder 2D-Teilerfassungsvorrichtung ist es möglich, die zu lackierenden Werkstücke exakt zu vermessen, um sie in dem anschließenden Lackierprozess genau und ohne großen Farbverlust optimal lackieren zu können.

Ausgehend von den mittels der 3D oder 2D-Teilerfassungsvorrichtung ermittelten Werte/Daten werden der Farbspritzroboter und der Flächenspritzautomat entsprechend angesteuert, um mit dem Farbauftrag zu beginnen. Bevorzugt ist eine Speichereinrichtung vorgesehen, die die ermittelten Werte/Daten speichert, um dann den Farbspritzroboter und den Flächenspritzautomaten anzusteuern.

Eine vorteilhafte Weiterbildung sieht vor, dass die Vorrichtung im Chargenbetrieb oder im Durchlaufbetrieb betreibbar ist.

Bevorzugt erfolgt das Lackieren des Werkstückes im Chargenbetrieb, d.h. das Förderband steht beim Lackiervorgang still.

Bevorzugt erfolgt das Lackieren des Werkstückes alternativ im Durchlaufbetrieb, d.h. das Förderband, angetrieben von mindestens einer Umlenktrommel, bewegt sich mit konstanter Geschwindigkeit und transportiert dabei das Werkstück.

Bevorzugt entspricht die Länge des Abstreifmittels mindestens der Breite des Förderbandes. Dadurch ist es möglich die aufgesprühte Farbe auf der gesamten Breite des Förderbandes zielführend abzunehmen (und später rückführen).

In einer bevorzugten alternativen Ausführungsform ist die Länge des Abstreifmittels etwas kleiner als die Breite des Förderbandes. Dadurch lässt sich ein Kontakt des Abstreifmittels mit der Kante des Förderbandes gänzlich vermeiden.

In einer weiteren besonders bevorzugten Ausgestaltung sind Abdeckbereiche zu beiden Seiten des Förderbandes vorgesehen, die sich entlang der Bewegungsrichtung des Förderbandes erstrecken. Damit ist es möglich die Randbereiche des Förderbandes keinem Farbauftrag auszusetzen. Das Förderband kann in diesen Bereichen folglich auch nicht verschmutzt werden.

Eine weitere vorteilhafte Weiterbildung sieht vor, dass das Abstreifmittel eine Rakel ist. Eine Rakel ist ein dünnes Werkzeug, das eine scharfe oder rund geschliffene Kante aufweist und bevorzugt aus einem geschliffenen Stahlband und besonders bevorzugt aus Kunststoff wie PVC, PU, Polyamid, Polester, PTB oder PTFE besteht. Die Rakel dient vorliegend dem Entfernen von überschüssiger Farbe an Transportbändern (Förderbändern).

Gemäß einer weiteren vorteilhaften Weiterbildung ist vorgesehen, dass die Farbspritzanlage ferner mindestens eine Befeuchtungseinrichtung aufweist. Damit ist es möglich, die auf dem Förderband befindliche Farbe anzunässen/zu befeuchten, um sie besser vom Förderband zu lösen. Bevorzugt wird eine Flüssigkeit als Lösemittel auf Basis des verarbeiteten Lacksystems verwendet um den Lösevorgang zu beschleunigen.

Eine weitere vorteilhafte Weiterbildung sieht vor, dass die Geschwindigkeit des Förderbandes kleiner gleich 25 m/min ist, bevorzugt kleiner gleich 4,5 m/min und besonders bevorzugt kleiner gleich 2,5 m/min. Je geringer die Geschwindigkeit des Förderbandes, desto eher lässt sich ein mögliches Verschleißen am Abstreifmittel und am Förderband feststellen sowie ein höherer Grad an Farbaustrag sicherstellen.

Besonders bevorzugt ist das Förderband lösungsmittelbeständig und/oder antistatisch aufgebaut. Besonders bevorzugt besteht das Förderband aus Kunststoff oder aus einer Stahl-Kunststoff-Kombination. Aufgrund der Beschaffenheit des Förderbandes lässt sich die zu lösende Farbe besonders gut mittels der Lackaustrageinrichtung abnehmen.

Eine weitere vorteilhafte Weiterbildung sieht vor, dass der Lackaustrageinrichtung mindestens eine Nachreinigungseinrichtung nachgeschaltet ist. Damit lässt sich Farbe, die noch am Förderband haftet und nicht von der Lackaustrageinrichtung entfernt werden konnte, nachträglich noch entfernen und bei Bedarf dem Lackauffangbehältnis zuführen.

Gemäß einem weiteren Aspekt der Erfindung ist ein Verfahren vorgesehen, aufweisend eine Farbspritzanlage gemäß einem der vorherigen Ansprüche, umfassend die folgenden Schritte: Erfassung des Werkstückes mittels der 3D oder 2D-Teilerfassungsvorrichtung, Ansteuern des Farbspritzroboters, Auftragen der Farbe auf die Seitenflächen und/oder auf die Deckflächen und/oder auf die innen liegenden Konturflächen des Werkstückes mittels dem Farbspritzroboter, Ansteuern des Flächenspritzautomaten und Auftragen der Farbe auf die Deckflächen und/oder auf die Seitenflächen des Werkstückes mittels des Flächenspritzautomaten.

Damit wird ein Verfahren bereitgestellt bei dem ausgehend von den ermittelten Messdaten/Werten der 3D oder 2D-Teilerfassungsvorrichtung der Farbspritzroboter über entsprechende technische Einrichtungen entsprechend ansteuerbar ist, um die Werkstücke zu lackieren. Somit lässt sich ausgehend von diesen Daten/Werten die Position des Farbspritzroboters und dessen mehrgliederigen Armes sowie die Farbspritzpistole präzise zur Orientierung des Werkstückes einstellen.

Bevorzugt ist der Spritzroboter auf Hilfsachsen, die parallel zur Längsseite des Fördebandes verlaufen, verfahrbar. Damit lässt sich der Farbspritzroboter und dessen mehrgliederiger Arm sowie die Farbspritzpistole präzise zum Werkstück verfahren.

Besonders bevorzugt ist der Farbspritzroboter eingerichtet die Seitenflächen des Werkstückes zu lackieren.

Besonders bevorzugt kommt der Flächenspritzautomat nach erfolgtem Lackieren der Seitenflächen und der innenliegenden Konturflächen (infolge Ausnehmungen oder Aussparungen am Werkstück) zum Einsatz, um die Deckfläche des Werkstückes zu lackieren.

Besonders bevorzugt ist der Flächenspritzautomat eingerichtet die Deckflächen des Werkstückes zu lackieren.

Der Flächenspritzautomat weist bevorzugt eine Vielzahl von Flächenspritzdüsen auf, die unabhängig voneinander entsprechend der ermittelten Messdaten/Werten der 3D-Teilerfassungsvorrichtung ansteuerbar sind. Die Flächenspritzvorrichtung ist dabei bevorzugt annähernd parallel zur Oberfläche des Förderbandes angeordnet, um insbesondere die Deckflächen der Werkstücke lackieren zu können.

Besonders bevorzugt weist der Flächenspritzautomat ein Mittel zur Höhenverstellung bzw. Höhenverdrehung auf, das bspw. mechanisch oder hydraulisch einstellbar ist. Entsprechend der Neigung der Deckfläche des Werkstückes können die Flächenspritzdüsen entsprechend eingestellt werden um den optimalen Farbauftrag zu gewährleisten.

Alternativ kann auch der Flächenspritzautomat vor dem Farbpritzroboter zum Einsatz kommen.

Besonders bevorzugt umfasst das Verfahren ferner die folgenden Schritte: Abnehmen verbleibender Farbe vom Förderband mittels der nachgeschalteten Lackaustrageinrichtung und Zuführen der abgenommenen Farbe in ein Lackrückgewinnungssystem.

Beim Lackiervorgang wird neben dem eigentlich zu lackierenden Werkstück auch das Förderband mit dem Lack besprüht. Um die auf dem Förderband haftende Farbe noch vor einem möglichen Antrocknen wieder abtragen zu können, wird die Farbe zunächst mittels der Befeuchtungseinrichtung angefeuchtet.

Nach dem Befeuchten der auf dem Förderband befindlichen Farbe wird mittels der Lackaustrageinrichtung die angefeuchtet Farbe an der Abschabvorrichtung abgeschabt/abgenommen. Die abgenommene Farbe wird dann in einem Lackauffangbehältnis gesammelt und kann dem Farbkreislauf und damit dem Farbspritzroboter und/oder dem Flächenspritzautomaten wieder zugeführt werden.

Weitere Vorteile und Einzelheiten der Erfindung werden anhand der in den Figuren dargestellten Ausführungsbeispiele erläutert. Die Figuren zeigen im Einzelnen:
- **Figur 1**: eine Seitenansicht einer erfindungsgemäßen Vorrichtung zum Lackieren von Werkstücken,
- **Figur 2**: eine Frontansicht der erfindungsgemäßen Vorrichtung zum Lackieren von Werkstücken aus Figur 1,
- **Figur 3**: eine erste schematische Ansicht eines Werkstückes aus Figur 1,
- **Figur 4**: eine zweite schematische Ansicht eines Werkstückes mit einer Aussparung aus Figur 1,
- **Figur 5**: eine erste Draufsicht auf ein Werkstück aus Figur 3 während des Lackiervorgangs mit einem Farbspritzroboter der erfindungsgemäßen Vorrichtung aus Figur 1,
- **Figur 6**: eine zweite Draufsicht auf ein Werkstück aus Figur 4 während des Lackiervorgangs mit dem Farbspritzroboter der erfindungsgemäßen Vorrichtung aus Figur 1 und
- **Figur 7**: eine dritte Draufsicht auf ein Werkstück aus Figur 3 während des Lackiervorgangs mit zwei Farbspritzrobotern der erfindungsgemäßen Vorrichtung aus Figur 1.

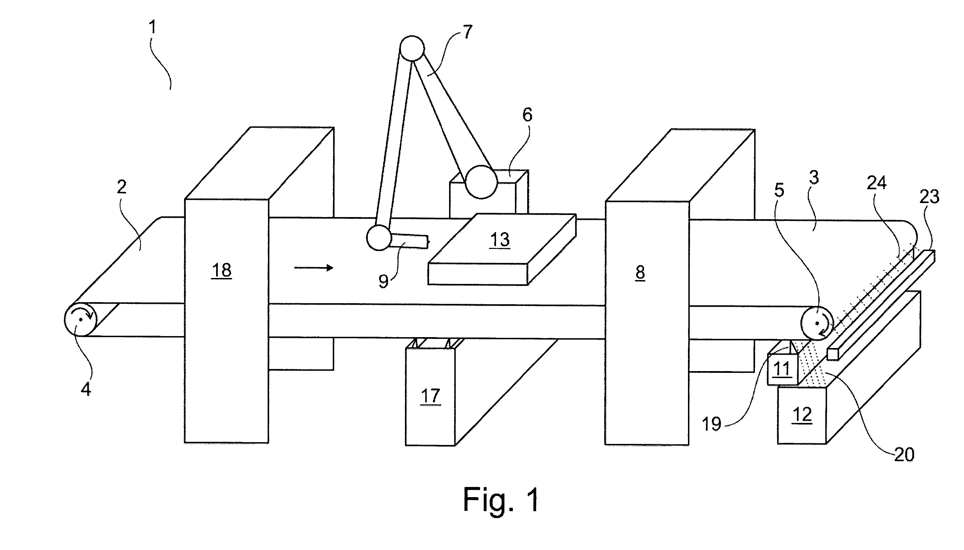

In **Figur 1** ist eine Seitenansicht einer erfindungsgemäßen Vorrichtung zum Lackieren von Werkstücken dargestellt. Die Vorrichtung 1 zum Lackieren von Werkstücken ist sehr einfach aufgebaut und besteht im Wesentlichen aus den folgenden Bauteilen: Bandförderer 2, Farbspritzroboter 6 und Flächenspritzautomat 8 sowie eine 3D-Teilerfassungsvorrichtung 18.

Der Bandförderer 2 weist ein Förderband 3, eine erste Umlenktrommel 4 und eine zweite Umlenktrommel 5 auf. Das Förderband 3 wird dabei mittels einer der beiden Umlenktrommeln 4 und 5 angetrieben. Das Förderband 3 transportiert die zu lackierenden Werkstücke von der 3D-Teilerfassungsvorrichtung 18 zum Farbspritzroboter 6 und dann weiter zum Flächenspritzautomaten 8 (siehe Pfeil auf dem Förderband 3). Im Anschluss an den Lackiervorgang werden die fertig lackierten Werkstücke 13 vom Förderband 3 genommen.

Eine Lackaustrageinrichtung 11 weist eine Abschabvorrichtung 19 auf, um überschüssige Farbe vom Förderband 3 abzunehmen. Die Lackaustrageinrichtung 11 ist unterhalb des Förderbandes 3 angeordnet.

Eine Befeuchtungseinrichtung 23, die vor der Lackaustrageinrichtung 11 angeordnet ist, sowie eine Nachreinigungseinrichtung 17 sind ebenfalls vorgesehen.

Mittels der 3D oder 2D-Teilerfassungsvorrichtung 18 ist es zunächst möglich, die zu lackierenden Werkstücke 13 exakt zu vermessen, um sie in dem anschließenden Lackierprozess genau und ohne großen Farbverlust optimal lackieren zu können.

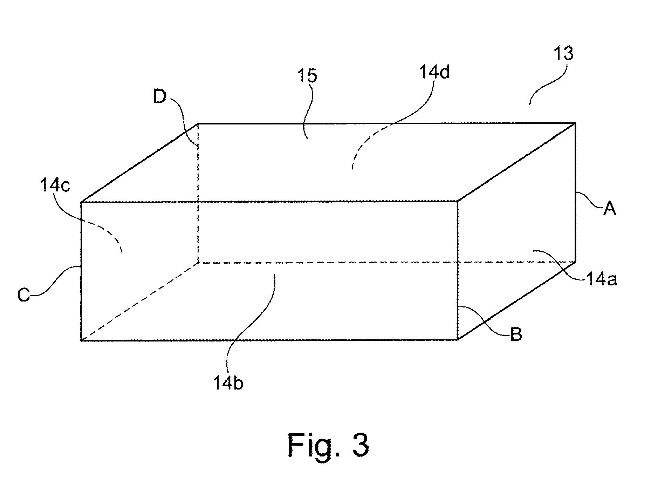

Ausgehend von den ermittelten Messdaten/Werten der 3D oder 2D-Teilerfassungsvorrichtung 18 ist der Farbspritzroboter 6 über entsprechende technische Einrichtungen entsprechend ansteuerbar, um die Werkstücke 13 zu lackieren. Entsprechend der Position des Farbspritzroboters 6 bzw. dessen mehrgliederiger Arm 7 ist auch die Farbspritzpistole 9 positionierbar. Das Werkstück 13 weist vorliegend eine quaderförmige Geometrie auf. Die insgesamt zu lackierende Oberfläche des Quaders setzt sich zusammen aus den vier Seitenflächen 14a - 14 d (Figur 3) und der Deckfläche 15 (Figur 3) des Werkstückes 13.

Damit wird der Spritzroboter 3, der mehrgliederige Arm 7 und die Spritzpistole 9 entsprechend in Position gebracht, um die gewünschten Seitenflächen 14 zu lackieren.

Der Lackiervorgang der Seitenflächen 14 des Werkstückes 13 erfolgt im Durchlaufbetrieb, d.h. das Förderband 3 bewegt sich mit konstanter Geschwindigkeit, angetrieben von den Umlenktrommeln 4 und 5.

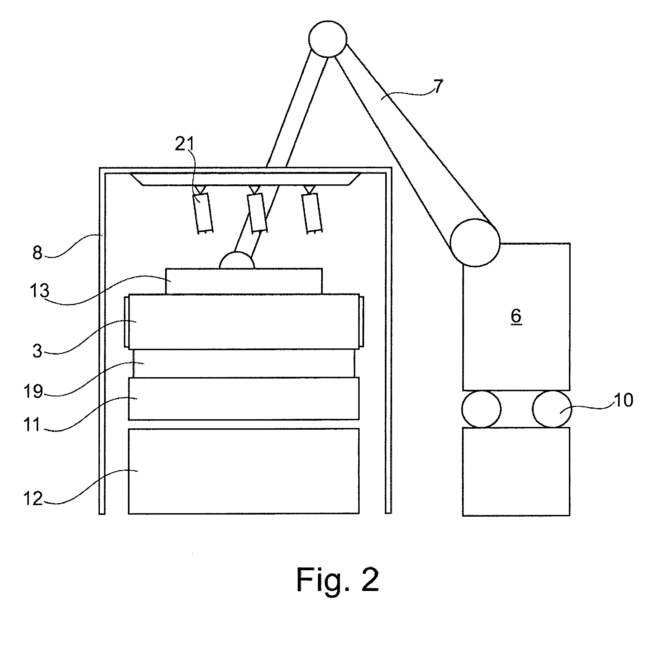

Nach erfolgtem Lackieren der Seitenflächen 14 kommt der Flächenspritzautomat 8 zum Einsatz. Der Flächenspritzautomat 8 weist eine Flächenspritzvorrichtung mit Flächenspritzdüsen 21 auf (Figur 2). Die Flächenspritzdüsen 21 sind unabhängig voneinander, entsprechend der ermittelten Messdaten/Werten der 3D-Teilerfassungsvorrichtung 18, ansteuerbar. Die Flächenspritzvorrichtung ist annähernd parallel zur Oberfläche des Förderbandes 3 angeordnet, um die Deckflächen 15 der Werkstücke 13 im Durchlaufbetrieb zu lackieren.

Ferner ist die Einstellung der Entfernung der Flächenspritzdüsen 21 zur jeweilig zu sprühenden Deckfläche 15 des Werkstückes 13 mittels mechanischer oder hydraulischer Mittel (nicht dargestellt) möglich.

Beim Lackiervorgang wird neben dem eigentlich zu lackierenden Werkstück 13 auch das Förderband 3 mit dem Lack besprüht. Um die auf dem Förderband 3 haftende Farbe noch vor einem möglichen Antrocknen wieder abtragen zu können, wird die Farbe zunächst mittels der Befeuchtungseinrichtung 23 angefeuchtet (siehe gestrichelte Linien 24).

Nach dem Befeuchten der auf dem Förderband befindlichen Farbe wird mittels der Lackaustrageinrichtung 11 die angefeuchtet Farbe an der Abschabvorrichtung 19 abgeschabt/abgenommen (siehe Falllinie 20 der Farbe).

Die abgenommene Farbe wird dann in dem Lackauffangbehältnis 12 gesammelt und kann dem Farbkreislauf und damit dem Farbspritzroboter 6 und/oder dem Flächenspritzautomaten 8 wieder zugeführt werden.

Farbe, die sich nicht abnehmen lässt, wird mittels der Nachreinigungseinrichtung 17, die nach der Lackaustrageinrichtung 11 angeordnet ist, noch zusätzlich vom Förderband 3 gelöst.

Figur 2 zeigt eine Frontansicht der erfindungsgemäßen Vorrichtung zum Lackieren von Werkstücken aus Figur 1.

Zusätzlich zu den in der Figur 1 beschriebenen Komponenten sind in Figur 2 eine Hilfsachse 10 des Spritzroboters 6 und die Flächenspritzdüsen 21 des Flächenspritzautomaten 8 dargestellt. Die Flächenspritzdüsen 21 sind eingerichtet sich über dem Werkstück 13 während des Farbauftrages entsprechend hin und her zu bewegen.

Die Hilfsachsen 10 dienen dem Farbspritzroboter dazu parallel entlang der Transportrichtung des Förderbandes 3 zu verfahren, um die entsprechenden Seitenflächen 14 des Werkstückes 13 zu lackieren.

Die Länge der Abstreifmittel 19 ist kleiner als die Breite des Förderbandes 3. Ein Kontakt des Abstreifmittels 19 mit der Kante des Förderbandes 3 ist somit ausgeschlossen.

Ferner sind Abdeckungen (nicht dargestellt) zu beiden Seiten des Förderbandes 3 vorgesehen, die sich entlang der Längsseite des Förderbandes 3 erstrecken. Damit ist es möglich die Randbereiche des Förderbandes 3 keinem Farbauftrag auszusetzen. Eine Verschmutzung des Förderbandes 3 wird in diesen Bereichen somit vermieden. Die Befeuchtungseinrichtung 23 ist aus Gründen der Übersicht nicht abgebildet.

**Figur 3** zeigt eine erste schematische Ansicht eines Werkstückes aus Figur 1. Das quaderförmige Werkstück 13 weist eine Grundfläche, eine Deckfläche 15 und vier Seitenflächen 14a bis 14d sowie auf. Die vier Kanten des Werkstückes 13 werden im Folgenden mit den Buchstaben A bis D versehen.

Die Kanten A und B begrenzen dabei die Fläche 14a, die Kanten B und C begrenzen die Fläche 14b, die Kanten C und D begrenzen die Fläche 14c und die Kanten D und A begrenzen die Fläche 14d.

Bis auf die Grundfläche werden alle Seitenflächen 14a - 14d mit dem Farbspritzroboter 6 und die Deckfläche 15 mit dem Flächenspritzautomaten 8 lackiert.

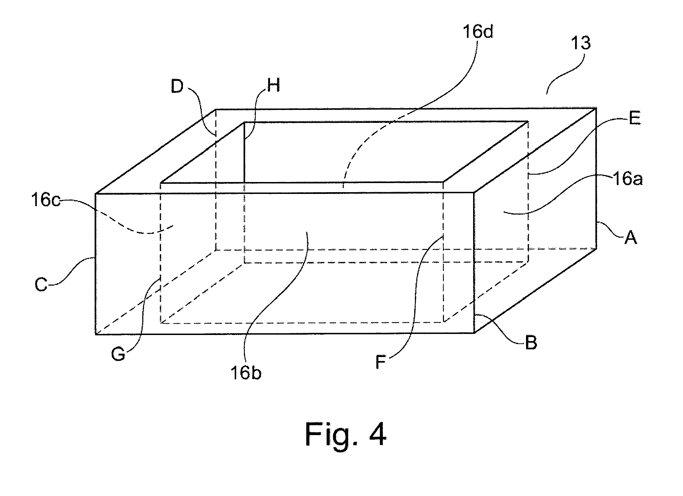

**Figur 4** zeigt eine zweite schematische Ansicht eines Werkstückes mit einer Aussparung aus Figur 1. Im Gegensatz zu dem unter Figur 3 beschriebenen quaderförmigen Werkstückes weist das Werkstück 13 aus Figur 4 zusätzlich eine Aussparung auf.

Die Aussparung weist innenliegende Konturen 16a bis 16d auf. Die Kanten E und F begrenzen dabei die Fläche 16a, die Kanten F und G begrenzen die Fläche 16b, die Kanten G und H begrenzen die Fläche 16c und die Kanten H und E begrenzen die Fläche 16d.

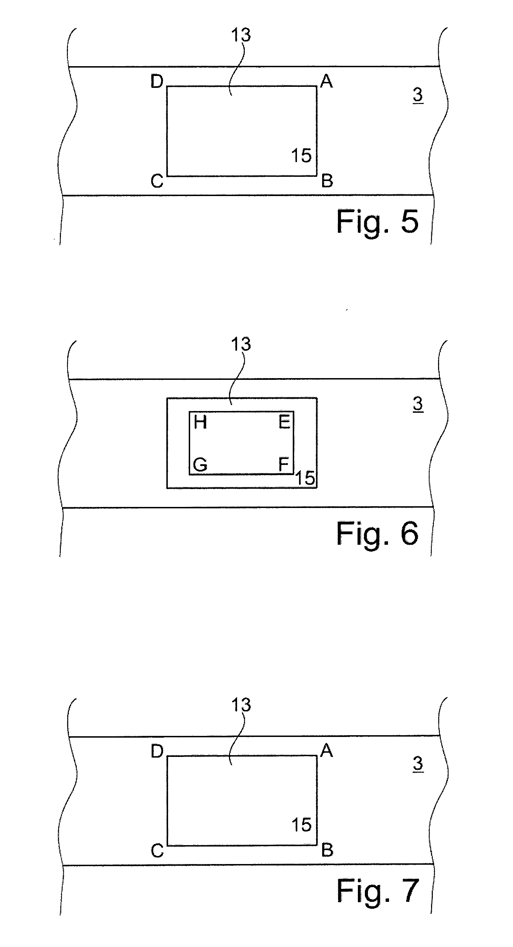

In **Figur 5** ist eine erste Draufsicht auf ein Werkstück aus Figur 3 während des Lackiervorgangs mit einem Farbspritzroboter der erfindungsgemäßen Vorrichtung aus Figur 1 dargestellt.

In der Draufsicht aus Figur 5 sind die Deckfläche 15 des Werkstückes 13 (gemäß Figur 3) und ein Teil des Förderbandes 3 dargestellt.

Der Farbspritzroboter 6 startet mit dem flächigen Farbauftrag am Werkstück 13 an der Kante A im Uhrzeigersinn über die Kanten B, C, D zur Kante A um die Seitenflächen 14a bis 14 d des Werkstückes 13 zu lackieren. Ein flächiger Farbauftrag am Werkstück 13 entgegen dem Uhrzeigersinn ist ebenfalls möglich.

Der Farbspritzroboter 6 kann dabei mittels Hilfsachsen 10 entlang einer Längsseite des Förderbandes 3 entsprechend verfahren werden.

**Figur 6** zeigt eine zweite Draufsicht auf ein Werkstück aus Figur 4 während des Lackiervorgangs mit dem Farbspritzroboter der erfindungsgemäßen Vorrichtung aus Figur 1.

In der Draufsicht aus Figur 6 sind die Deckfläche 15 und ein Teil des Förderbandes 3 des Werkstückes 13 dargestellt. Ferner weist das Werkstück 13 eine Aussparung gemäß Figur 4 auf.

Der Farbspritzroboter 6 startet mit dem flächigen Farbauftrag an der Kante E im Uhrzeigersinn über die Kanten F, G und H zur Kante E um die innen liegenden Konturflächen des Werkstückes 13 zu lackieren.

Der Farbspritzroboter 6 kann dabei mittels Hilfsachsen 10 entlang einer Längsseite des Förderbandes 3 entsprechend verfahren werden.

**Figur 7** zeigt eine dritte Draufsicht auf ein Werkstück aus Figur 3 während des Lackiervorgangs mit zwei Farbspritzrobotern der erfindungsgemäßen Vorrichtung aus Figur 1.

In der Draufsicht aus Figur 7 sind die Deckfläche 15 des Werkstückes 13 und ein Teil des Förderbandes 3 dargestellt.

Das Werkstück weist neben den Kanten A, B, C und D auch die Punkte I und J auf.

Im Unterschied zu dem aus den Figuren 5 und 6 beschriebenen Farbspritzroboter 6 kommen in Figur 7 zwei Farbspritzroboter zum Einsatz. Die Farbspritzroboter befinden sich dann einander gegenüberliegend zu beiden Längsseiten des Förderbandes 3.

Der erste Farbspritzroboter beginnt entgegen dem Uhrzeigersinn den Lackiervorgang an der Kante A, in Richtung zur Kannte D bis hin zur Kante C, um die Seitenflächen 14d und 14c des Werkstückes 13 zu lackieren.

Der zweite Farbspritzroboter beginnt im Uhrzeigersinn den Lackiervorgang an der Kante A, in Richtung zur Kannte B bis hin zur Kante C, um die Seitenflächen 14a und 14b des Werkstückes 13 zu lackieren.

Die Farbspritzroboter können dabei mittels der Hilfsachsen entlang den Längsseiten des Förderbandes entsprechend verfahren werden.

Mit der erfindungsgemäßen Vorrichtung zum Lackieren von Werkstücken wird eine kompakte Einheit bereitgestellt, die sich zudem durch einen einfachen technischen Aufbau auszeichnet, einen präzisen Farbauftrag gewährleistet und darüber hinaus eine verbesserte Lackrückgewinnung bewerkstelligt.

### Bezugszeichenliste

- 1: Vorrichtung zum Lackieren von Werkstücken
- 2: Bandförderer
- 3: Förderband
- 4: erste Umlenktrommel des Bandförderers
- 5: zweite Umlenktrommel des Bandförderers
- 6: Farbspritzroboter
- 7: mehrgliederiger Arm des Farbspritzroboters
- 8: Flächenspritzautomat
- 9: Spritzpistole
- 10: Hilfsachse
- 11: Lackaustrageinrichtung
- 12: Lackauffangbehältnis
- 13: Werkstück
- 14: Seitenflächen
- 15: Deckflächen
- 16: innen liegende Konturflächen
- 17: Nachreinigungseinrichtung
- 18: 3D oder 2D-Teilerfassungsvorrichtung
- 19: Abschabvorrichtung
- 20: Falllinie der Farbe
- 21: Flächenspritzvorrichtung
- 22: Aussparung
- 23: Befeuchtungseinrichtung
- 24: Sprühlinie der Befeuchtungseinrichtung
- A-H: Kanten

## Patentansprüche

1. Vorrichtung (1) zum Lackieren von Werkstücken umfassend
- einen umlaufend antreibbaren Bandförderer (2) zum Transport zu lackierender Werkstücke (13),
- mindestens einen Farbspritzroboter (6) und
- mindestens einen Flächenspritzautomaten (8),
wobei der Farbspritzroboter (6) eingerichtet ist, Seitenflächen (14) und/oder Deckflächen (15) des Werkstückes (13) zu lackieren und der Flächenspritzautomat (8) eingerichtet ist, die Deckflächen (15) und/oder Seitenflächen (14) des Werkstückes (13) zu lackieren.

2. Vorrichtung (1) zum Lackieren von Werkstücken gemäß Anspruch 1, wobei der Farbspritzroboter (6) eingerichtet ist, im Werkstück innen liegende Konturflächen (16) zu lackieren.

3. Vorrichtung (1) zum Lackieren von Werkstücken gemäß einem der vorherigen Ansprüche, wobei der Farbspritzroboter (6) mindestens eine Spritzpistole (9) aufweist.

4. Vorrichtung (1) zum Lackieren von Werkstücken gemäß einem der vorherigen Ansprüche, wobei die Spritzpistole (9) um mehrere Achsen beweglich ist.

5. Vorrichtung (1) zum Lackieren von Werkstücken gemäß einem der vorherigen Ansprüche, wobei der Farbspritzroboter (6) entlang mindestens einer zusätzlichen Hilfsachse (10) verfahrbar ist.

6. Vorrichtung (1) zum Lackieren von Werkstücken gemäß Anspruch 1, wobei der Flächenspritzautomat (8) mindestens eine Flächenspritzvorrichtung (21) aufweist.

7. Vorrichtung (1) zum Lackieren von Werkstücken gemäß einem der vorherigen Ansprüche, wobei dem Bandförderer (2) eine Lackaustrageinrichtung (11) und/oder eine Nachreinigungseinrichtung (17) nachgeschaltet ist.

8. Vorrichtung (1) zum Lackieren von Werkstücken gemäß einem der vorherigen Ansprüche, wobei eine 3D oder 2D-Teilerfassungsvorrichtung (18) der Farbspritzanlage (1) vorgeschaltet ist.

9. Vorrichtung (1) zum Lackieren von Werkstücken gemäß einem der vorherigen Ansprüche, wobei die Vorrichtung im Chargenbetrieb oder im Durchlaufbetrieb betreibbar ist.

10. Verfahren aufweisend eine Vorrichtung (1) zum Lackieren von Werkstücken gemäß einem der vorherigen Ansprüche, umfassend die folgenden Schritte
- Erfassung des Werkstückes (13) mittels der 3D-Teilerfassungsvorrichtung (18),
- Ansteuern des Farbspritzroboters (6),
- Auftragen der Farbe auf die Seitenflächen (14) und/oder auf die Deckflächen (15) und/oder auf die innen liegenden Konturflächen (16) des Werkstückes (13) mittels dem Farbspritzroboter (6),
- Ansteuern des Flächenspritzautomaten (8) und
- Auftragen der Farbe auf die Deckflächen (15) und/oder auf die Seitenflächen (14) des Werkstückes (13) mittels des Flächenspritzautomaten (8).

11. Verfahren gemäß Anspruch 10, ferner umfassend die folgenden Schritte:
- Abnehmen verbleibender Farbe vom Förderband (3) mittels der nachgeschalteten Lackaustrageinrichtung (11) und
- Zuführen der abgenommenen Farbe in ein Lackrückgewinnungssystem.
